# EUROPEAN PATENT APPLICATION

(11) **EP 4 756 779 A2**
(43) Date of publication of application: **10.06.2026**
(21) Application number: 25220486.2
(22) Date of filing: 03.12.2025
(51) Int. Cl.: G08G 1/01, B60W 40/06

(54) **POTHOLE WARNING METHOD FOR VEHICLES**

(30) Priority: 09.12.2024 CN 202411802980
(71) Applicant: Volvo Car Corporation, 405 31 Göteborg (SE)
(72) Inventor: WANG, Wei, Shanghai (CN); YANG, Hongru, Shanghai (CN)
(74) Representative: Kransell & Wennborg KB

(57) **Abstract**

A pothole warning method for a vehicle is provided. The method comprises the steps of acquiring wheel-related parameters and suspension-related parameters during driving of the vehicle; identifying a pothole on a road on which the vehicle is traveling and a severity level of the pothole based on the wheel-related parameters and the suspension-related parameters; generating pothole event information based on the identification result, the pothole event information comprising a location of the identified pothole, a severity level of the identified pothole, and a time at which the pothole was identified; and transmitting the pothole event information to at least one of a cloud server, another vehicle, or a roadside facility.

## Description

### TECHNICAL FIELD

The present disclosure generally relates to the technical field of vehicle control and, more specifically, to a pothole warning method for a vehicle.

### BACKGROUND

Potholes on the road are depressions or holes in the pavement that threaten driving safety and comfort. To address this problem, a typical method in the prior art is to use an onboard camera to capture road images and apply machine learning to the captured images for pothole detection. However, this method faces practical challenges. For example, camera performance is highly susceptible to weather conditions. In severe weather such as rain, snow, or haze, the camera's view can be obstructed, leading to degraded image quality and compromised identification accuracy. Furthermore, even if accurate identification is achieved, the result often fails to provide information on the pothole's severity level, preventing the vehicle from implementing appropriate countermeasures.

### SUMMARY

According to an embodiment of the present disclosure, a pothole warning method for a vehicle is provided. The method comprises the steps of acquiring wheel-related parameters and suspension-related parameters during driving of the vehicle; identifying a pothole on a road on which the vehicle is traveling and a severity level of the pothole based on the wheel-related parameters and the suspension-related parameters; generating pothole event information based on the identification result, the pothole event information comprising a location of the identified pothole, a severity level of the identified pothole, and a time at which the pothole was identified; and transmitting the pothole event information to at least one of a cloud server, another vehicle, or a roadside facility.

According to another embodiment of the present disclosure, a vehicle is provided. The vehicle comprises a detection unit and a pothole warning unit. The detection unit is configured to detect wheel-related parameters and suspension-related parameters during driving of the vehicle. The pothole warning unit configured to acquire the wheel-related parameters and the suspension-related parameters; identify a pothole on a road on which the vehicle is traveling and a severity level of the pothole based on the wheel-related parameters and the suspension-related parameters; generate pothole event information based on the identification result, the pothole event information comprising a location and a severity level of the identified pothole, and a time at which the pothole was identified; and transmit the pothole event information to one or more of a cloud server, another vehicle, and a roadside facility.

According to yet another embodiment of the present disclosure, a non-transitory computer-readable medium is provided. The non-transitory computer-readable medium is configured with instructions stored therein which, when executed, cause one or more processors to carry out the steps comprising: acquiring wheel-related parameters and suspension-related parameters during driving of the vehicle; identifying a pothole on a road on which the vehicle is traveling and a severity level of the pothole based on the wheel-related parameters and the suspension-related parameters; generating pothole event information based on the identification result, the pothole event information comprising a location of the identified pothole, a severity level of the identified pothole, and a time at which the pothole was identified; and transmitting the pothole event information to at least one of a cloud server, another vehicle, or a roadside facility.

### BRIEF DESCRIPTION OF THE DRAWINGS

FIG. 1 is a schematic block diagram of a pothole warning system for a vehicle according to an embodiment of the present disclosure.
FIGS. 2A-2C schematically illustrate some application scenarios of the pothole warning system shown in FIG. 1.
FIG. 3 is a flowchart of a pothole warning method for a vehicle according to an embodiment of the present disclosure.
FIG. 4A is a flowchart of a pothole warning method for a vehicle according to another embodiment of the present disclosure.
FIG. 4B illustrates an application scenario of the pothole warning method in FIG. 4A.
FIG. 5A is a flowchart of a pothole warning method for a vehicle according to yet another embodiment of the present disclosure.
FIG. 5B illustrates an application scenario of the pothole warning method in FIG. 5A.

### DETAILED DESCRIPTION

Embodiments of the present disclosure relate to a pothole warning solution for a vehicle, supporting the vehicle's operation on roads with potholes.

The pothole warning solution according to the embodiments of the present disclosure is applicable to a driver driving mode and also applicable to an autonomous driving mode. In embodiments of the present disclosure, the autonomous driving mode should be broadly understood to cover various levels of autonomous driving and driving assistance, i.e., the autonomous driving mode includes driving assistance of different degrees of automation. For example, in the autonomous driving mode, the vehicle can be fully autonomously or semi-autonomously or can be driven with the assistance of an Advanced Driver Assistance System (ADAS).

Herein below, embodiments of the present disclosure are described with reference to the drawings.

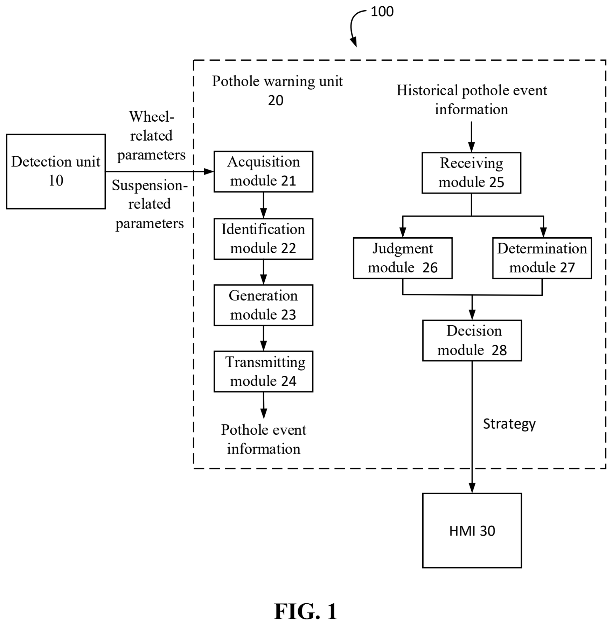

FIG. 1 illustrates a pothole warning system 100 for a vehicle according to an embodiment of the present disclosure (hereinafter simply referred to as "system 100"). The system 100 includes a detection unit 10, a pothole warning unit 20, and a human-machine interface (HMI) 30.

The detection unit 10 is configured to detect a parameter characterizing the response of the vehicle state to the current road surface condition during driving of the vehicle. The parameter includes wheel-related parameters and suspension-related parameters.

The wheel-related parameters include parameters that can characterize the response of a wheel state to the current road surface condition. In an example, the wheel-related parameters include one or more of the following: vertical position of each wheel, tire pressure of each wheel, lateral acceleration of each wheel, longitudinal acceleration of each wheel. The vertical position of each wheel refers to, for example, a vertical distance between a center point of each wheel and a predetermined reference plane. The predetermined reference plane may be a horizontal plane where the vehicle fender is located or a horizontal plane where the vehicle center of gravity is located. The predetermined reference plane may also be other reference planes capable of reflecting the vertical position of the wheel. The tire pressure of each wheel may be directly measured by a tire pressure sensor installed inside the tire or may be obtained by calculating related parameters (such as tire deformation and vehicle load).

Suspension-related parameters include parameters that can characterize the response of a suspension state to the current road surface condition. In an example, the suspension-related parameters include one or more of the following: front suspension height, rear suspension height, and damping force of a damper coupled to each wheel.

According to an example of the present disclosure, the detection unit 10 may include one or more sensors for detecting the above-mentioned wheel-related parameters and one or more sensors for detecting the above-mentioned suspension-related parameters. The present disclosure does not limit specific types of these sensors.

When a wheel on one side of the vehicle drives over a pothole, the state of that wheel will differ from the state of the wheel on the opposite side, and the damping force of the damper coupled to that wheel will also differ from the damping force of the damper coupled to the wheel on the opposite side. In accordance with examples of the present disclosure, monitoring the dynamic behavior of each wheel is combined with monitoring the response of the suspension system, and the evaluation of potholes on the road (the road surface state) becomes more rapid, accurate, and robust based on the fusion of these two dimensions of monitoring.

The pothole warning unit 20 includes an acquisition module 21, an identification module 22, a generation module 23, a transmitting module 24, a receiving module 25, a judgment module 26, a determination module 27 and a decision module 28. These modules are named solely to denote their functionality and are not meant to define their implementation details or physical arrangement. By way of example, a module may be arranged on a single chip or circuit or distributed across multiple ones. One or more of these modules can be subdivided into smaller functional sub-modules. Additionally, some modules, such as the transmitting module 24 and the receiving module 25, can be combined into a single module (e.g., a communication module).

The pothole warning unit 20 and its modules may be implemented in hardware, software, or a combination thereof. Hardware implementations may utilize one or more of the following: an application-specific integrated circuit (ASIC), a digital signal processor (DSP), a programmable logic device (PLD), a field-programmable gate array (FPGA), a processor, a controller, a microcontroller, a microprocessor, or another electronic unit. Software implementations may include microcode, program code, or code segments stored in a non-transitory computer-readable medium (such as a memory) and executed as instructions by a processor.

In an embodiment, the pothole warning unit 20 is disposed in at least one of an Electronic Control Unit (ECU), a Vehicle Control Unit (VCU), or a domain controller of the vehicle. In another embodiment, the pothole warning unit 20 may be implemented as a first subset of its modules is implemented in an ECU and a second subset of its modules is implemented in another ECU or in the VCU.

The HMI 30 is used to interact with the vehicle driver, for example, to present information related to pothole avoidance decisions. Implementations of the HMI 30 may include, among others, text, graphical, and voice interfaces.

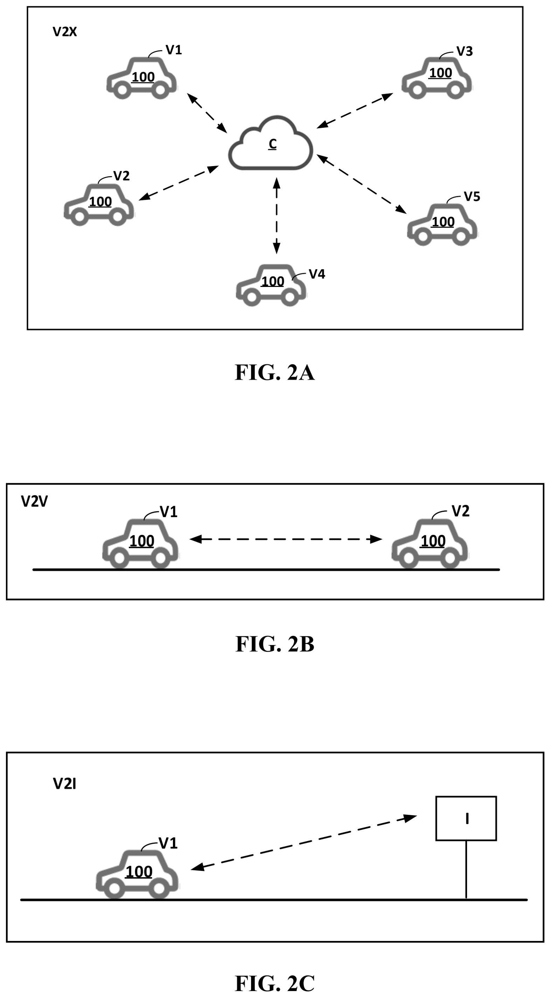

FIGS. 2A-2C show exemplary application scenarios of the pothole warning system 100.

FIG. 2A shows a vehicle-to-everything (V2X) scenario. In the V2X scenario shown in FIG. 2A, there are a plurality of vehicles V1-V5 and a cloud server C. Each vehicle is equipped with the pothole warning system 100 and is communicatively connected to the cloud server C. These vehicles can also communicate with one another. In the V2X scenario shown in FIG. 2A, each vehicle may upload to the cloud server C the pothole event information generated based on one or more potholes it has identified. Thus, each vehicle can receive pothole event information from the cloud server C before reaching a pothole that has been identified (which may have been identified by another vehicle in the past or by the vehicle itself in the past), enabling suitable actions to be taken in advance before reaching the identified pothole.

In addition, in the scenario shown in FIG. 2A, a combination of each vehicle and the cloud server C can be referred to as a vehicle-to-cloud (V2C) scenario.

FIG. 2B illustrates a V2V (Vehicle-to-Vehicle) scenario in which both vehicle V1 and vehicle V2 are equipped with the pothole warning system 100 and are traveling successively on the same road. When the distance between the rear vehicle V2 and the front vehicle V1 is within the communicable range (i.e., the preset communication distance between vehicles), the front vehicle V1 transmits pothole event information, which has been generated based on one or more identified potholes, to the rear vehicle V2. This allows the rear vehicle V2 to take appropriate measures in advance before reaching the potholes.

FIG. 2C shows a V2I (Vehicle-to-Infrastructure) scenario. In the V2I scenario shown in FIG. 2C, the vehicle V1 transmits the pothole event information, which has been generated based on one or more identified potholes, to the roadside facility I. In this way, when the distance between the vehicle V2 and the roadside facility I is within the communicable distance (i.e., the preset communicable distance between the vehicle and the roadside facility), the roadside facility I transmits the pothole event information to the vehicle V2. In this way, the vehicle V2 can take appropriate measures in advance before reaching the potholes.

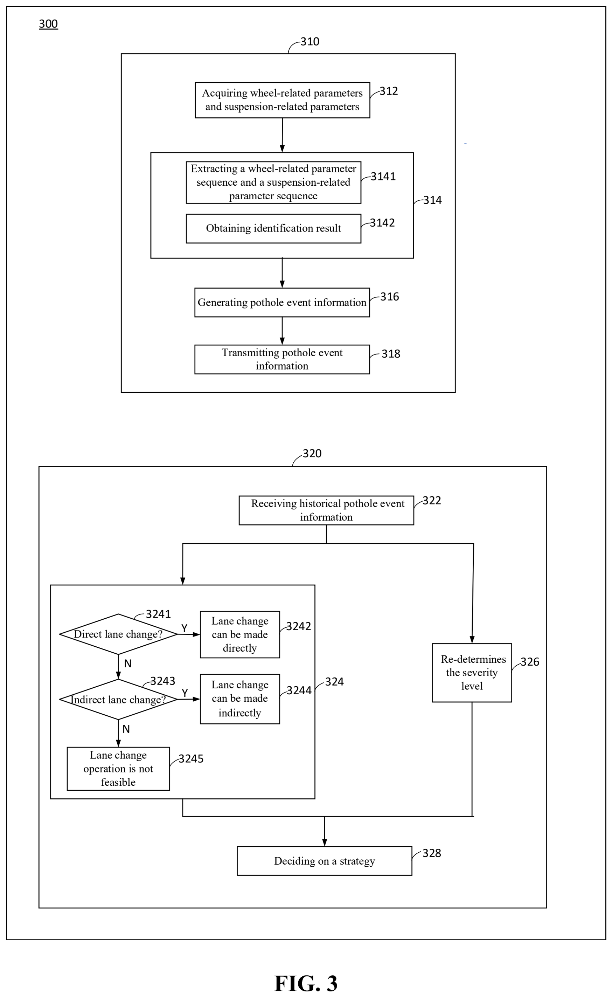

FIG. 3 illustrates a pothole warning method 300 for a vehicle according to an embodiment of the present disclosure. The method 300, which can be executed by the pothole warning unit 20, comprises two main processes: identifying a pothole on the road being driven (process 310), and determining a strategy to avoid driving over a historical pothole based on historical pothole event information (process 320).

The process 310 is described in the following.

Referring to FIG. 3, at block 312, the acquisition module 21 acquires wheel-related parameters and suspension-related parameters from the detection unit 10. These parameters characterize the vehicle's response to road surface conditions. The wheel-related parameters include one or more of the following: vertical position of each wheel, tire pressure of each wheel, lateral acceleration of each wheel, and longitudinal acceleration of each wheel. The suspension-related parameters include one or more of the following: front suspension height, rear suspension height, and damping force of a damper coupled to each wheel. It is noted that the above descriptions of the wheel-related and suspension-related parameters are applicable here.

At block 314, the identification module 22 identifies a pothole on a road on which the vehicle is traveling and a severity level of the pothole based on the wheel-related parameters and the suspension-related parameters. Examples of block 314 are described below.

In some examples, at block 3141, the identification module 22 extracts, from the acquired wheel-related parameters and suspension-related parameters, a wheel-related parameter sequence and a suspension-related parameter sequence that correspond to a predetermined driving distance.

At block 3142, the identification module 22 inputs the extracted wheel-related parameter sequence and the suspension-related parameter sequence into a pothole identification model and outputs the identification result from the pothole identification model. The identification result includes either the detection of a pothole along with its severity level, or no pothole detected.

The pothole identification model is customized for the vehicle using its attribute data, such as vehicle weight, wheel hub size, tire material, and suspension spring stiffness. These data represent the vehicle's physical characteristics, providing the necessary configuration background for the pothole identification model and enabling it to more accurately interpret the vehicle's responses to varying road conditions.

In some examples, the pothole identification model is a trained machine learning model configured to identify potholes from wheel-related and suspension-related parameters. These parameters are collected during vehicle travel over a predetermined distance.

The training data for training the machine learning model include first training data. The first training data includes pothole feature data, wheel-related parameters, suspension-related parameters, and a corresponding predetermined pothole severity level. The machine learning model is trained using the first training data. In this setup, the pothole feature data, wheel-related parameters, suspension-related parameters are the model inputs, and the severity level is the output. Through this training process, the machine learning model obtains the ability to identify potholes and their severity levels.

Examples of the first training data are described in the following.

The pothole feature data comprise the radius, depth, and profile for each of a plurality of potholes. These parameters provide an accurate geometric characterization of the pavement pothole, allowing the pothole identification model to establish the relationship between pothole geometry and vehicle dynamics.

As the vehicle drives over a pothole, the wheel-related parameters are detected for the front wheel that traverses it and for the opposite front wheel that bypasses it. A comparative analysis of these parameters thereby enables the pothole identification model to differentiate the behavioral patterns between front wheels that traverses (contacts) the pothole and that does not.

The front and rear suspension heights and the damping forces of the corresponding wheel dampers are monitored as the vehicle traverses the pothole (is traveling over the pothole). These parameters help the pothole identification model characterize the changes in the suspension system during this event (the vehicle is traveling over the pothole).

The severity level of each pothole is predefined as the target output for model training. These severity levels can be categorical (e.g., High, Medium, Low) or numerical (e.g., a 1-10 scale). The severity level for example is assigned in advance through an expert assessment system, which quantifies the pothole's impact on vehicle stability during traversal.

In the model training process, a supervised learning method may be used, in which pothole feature data, wheel-related parameters, and suspension-related parameters are used as the input feature set, and the severity level of a pothole is used as the prediction target (output). By constructing an advanced machine learning model, such as a neural network, a random forest, or a support vector machine, the model can learn the non-linear mapping relationship between the input features and the target output.

In some examples, the model training process is as follows. First, the first training data is preprocessed, for example, by cleaning, normalizing, or standardizing the input data of the first training data to remove noise and ensure efficient model training. Then, model parameters are adjusted through methods such as cross-validation and grid search to achieve optimal model performance. Then, a portion of the preprocessed first training data is used as the training dataset to train the model, while another portion of the preprocessed first training data is used as the validation set to evaluate the generalization ability of the model trained with the training dataset and prevent overfitting. Then, model performance is continuously evaluated by calculating evaluation metrics including accuracy, recall, and F1 score, and the model structure or training strategy is adjusted based on the evaluation results until a predetermined qualified prediction accuracy is achieved. The machine learning model trained in this way can accurately determine whether the vehicle has encountered a pothole and assess the severity level of the pothole based on newly detected wheel-related parameters and suspension-related parameters.

According to some examples of the present disclosure, the training data may further include second training data. Training with the second training data can enable the model to have the ability to filter out other types of uneven road surfaces besides potholes.

The second training data include additional wheel-related parameters, additional suspension-related parameters, and data representing a non-pothole event. These parameters are detected while the vehicle is traversing other types of uneven road surfaces. Other types of uneven road surfaces can include uneven pavement types other than potholes, for example, pavement made of cobblestone, road sections with manhole covers, and rough pavement in the shape of a washboard.

By training the model with the second training data, the model gains the ability to filter out interference signals from other types of uneven road surfaces, allowing it to exhibit stronger robustness and higher accuracy in pothole identification.

In addition, according to block 3141, extracting the wheel-related parameter sequence and the suspension-related parameter sequence over the predetermined distance traveled by the vehicle is advantageous. Because this approach ensures that the detected parameters input into the model each time only contain data related to one independent pothole event (or contain no data related to any pothole event), the complexity of model processing due to the simultaneous inclusion of two or more potholes' information is effectively avoided. Through this method, the information related to each pothole can be accurately analyzed based on data related to a single pothole, thereby improving the accuracy of the model in identifying a single pothole and its severity level.

Moreover, it is advantageous to use a predetermined distance rather than a predetermined duration as a constraint condition for the parameter sequences, because this approach can eliminate the potential impact of vehicle speed changes on data consistency. For example, when driving at a high speed, the vehicle will pass a predetermined road section in a short time; conversely, when driving at a low speed, the time required to pass the same road section will be prolonged. If the input data of the parameter sequences is generated with a predetermined duration, input data at different vehicle speeds may be difficult to directly compare due to differences in distance spans. However, obtaining the parameter sequences as input data over a predetermined distance ensures comparability of the input data regardless of changes in vehicle speed. This approach makes an important contribution to improving the generalization ability and stability of the model under different vehicle speed conditions.

At block 316, where the identification module 22 identifies a pothole, the generation module 23 generates pothole event information. The pothole event information includes: 1) event type: pothole; 2) event severity: the severity level of the pothole; 3) occurrence time of the event: time when the pothole is identified; and 4) occurrence location of the event: pothole position, which can be represented by the vehicle position when the pothole is identified (the vehicle position can be provided by a vehicle-mounted positioning device).

At block 318, the transmitting module 24 transmits the generated pothole event information to one or more of the following: a cloud server (the cloud server is, for example, a vehicle network system server), another vehicle, or a roadside facility.

According to some examples of the present disclosure, a plurality of transmission methods can be used. In an example, the generated pothole event information is transmitted in real time to the cloud server. This example is applicable to the V2X scenario shown in FIG. 2A. In another example, the generated pothole event information is first stored locally in the vehicle, and when a communication connection is established with another vehicle, the stored pothole event information is transmitted to the communicatively connected vehicle. This example is applicable to the V2V scenario shown in FIG. 2B. In yet another example, the generated pothole event information is first stored locally in the vehicle, and when a communication connection with the roadside facility is established, the stored pothole event information is transmitted to the communicatively connected roadside facility. This example is applicable to the V2I scenario shown in FIG. 2C. In addition, in this example, the roadside facility may upload the received pothole event information to the cloud server.

The process 320 is described in the following.

Referring to FIG. 3, at block 322, the receiving module 25 receives historical pothole event information to learn that there is a historical pothole on the road ahead to be traversed. For example, the receiving module 25 receives historical pothole event information from a cloud server, roadside facility, or another vehicle.

It is noted that the pothole identified in process 310 can be considered a new pothole, meaning it is a pothole detected for the first time by the vehicle (the ego vehicle). The pothole event information generated based on this new pothole will be uploaded or shared. The historical pothole mentioned in process 320 refers to one detected in the past by the vehicle (the ego vehicle) or another vehicle, and the historical pothole event information generated based on it can be stored in a cloud server, a roadside facility, or another vehicle.

When the pothole event information based on a "new pothole" is sent to a cloud server, another vehicle, or a roadside facility, this information becomes "historical pothole event information." For example, if the vehicle (the ego vehicle) identifies a new pothole, generates pothole event information, and uploads it to the cloud server, then when another vehicle receives this information from the cloud server, it is considered historical pothole event information upon receipt.

The historical pothole event information includes: 1) event type: historical pothole; 2) event severity: the severity level of the historical pothole; 3) occurrence time of the event: the time when the historical pothole was identified; and 4) occurrence location of the event: the historical pothole location, i.e., the vehicle location when the pothole was identified.

At block 324, based on the traffic conditions around the vehicle, the judgment module 26 determines whether the vehicle can avoid traveling over the historical pothole on the road ahead by changing lanes. Examples related to block 324 are described below.

In some examples, at block 3241, the judgment module 26 evaluates whether a direct lane change is feasible according to the traffic conditions around the vehicle and the relative speed between the ego vehicle and the front and rear adjacent vehicles. If it is judged that a lane change can be made directly, a positive judgment is output, indicating that a lane change can be made directly (block 3242). If the direct lane change is evaluated to be infeasible, a further judgment (block 3243) is made as to whether sufficient space can be created to safely change lanes by adjusting the vehicle speed, i.e., by accelerating or decelerating. If it is judged that such a strategy can successfully implement the lane change, a positive judgment result is output, indicating that the lane change can be performed by creating the necessary space (block 3244). If it is judged that the lane change cannot be successfully performed even by adjusting the vehicle speed, a negative judgment result is output, indicating that the lane change operation is not feasible in the current situation (block 3245).

At block 326, the determination module 27 determines a confidence level for the historical pothole information based on the time elapsed since the historical pothole was identified and re-determines the severity level of the historical pothole based on the determined confidence level. In general, the more time that has passed since the identification of the historical pothole, the more likely it is that the pothole has been repaired, and the lower the confidence level of the historical pothole information. Examples of block 326 are described below.

In some examples, when the time at which the historical pothole event information is received is more than a first predetermined time period after the time when the historical pothole is identified and has not yet reached a second predetermined time period, the determination module 27 assigns the historical pothole event information a first confidence level (the first confidence level can be referred to as a higher confidence level). When the confidence level of the historical pothole event information is the first confidence level, the severity level of the historical pothole remains the same as the severity level included in the historical pothole event information. When the time at which the historical pothole event information is received exceeds the second predetermined time period after the time when the historical pothole is identified, the determination module 27 assigns the historical pothole event information to a second confidence level, lower than the first confidence level (the second confidence level can be referred to as a lower confidence). When the confidence level of the historical pothole event information is the second confidence level, the severity level of the pothole is reduced to a severity level lower than the severity level included in the historical pothole event information; for example, the severity level is reduced by one level.

At block 328, the decision module 28 decides on a strategy based on the result of the lane-change possibility judgment and the re-determined severity level. Specifically, if it is judged that the vehicle can avoid driving over the historical pothole, a decision is made to control the vehicle to directly change lanes to avoid traveling over the historical pothole. If it is judged that the lane change can be successfully performed by creating the necessary space, a decision is made to adjust the vehicle speed to create the necessary space and change lanes to avoid traveling over the historical pothole. If it is judged that the vehicle cannot avoid driving over the historical pothole through a lane-changing operation, an adjustment of the operating state of the vehicle is determined according to the re-determined severity level, so that the instability of the vehicle is reduced during the process of traveling over the historical pothole.

In some examples, determining the adjustment of the operating state of the vehicle according to the re-determined severity level includes determining an upper speed limit for the vehicle when travelling over the historical pothole and an adjustment amount for the damping coefficient of the suspension system according to the re-determined severity level. In general, the higher the re-determined severity level, the lower the upper vehicle speed limit is set within a predetermined vehicle speed adjustment range, and the greater the damping coefficient of the suspension system is set within a predetermined damping coefficient adjustment range. The predetermined vehicle speed adjustment range is, for example, 50% to 100% of the current road speed limit. The predetermined damping coefficient adjustment range is, for example, 60% to 150% of the standard mode damping coefficient.

Below, using three scenarios, namely, the re-determined e severity levels being high, medium, and low as an example, the adjustment of the operating state of the vehicle is described.

When the re-determined severity level is low, the adjustment includes: adjusting the upper speed limit of the vehicle to 80% of the current road speed limit to ensure that the vehicle drives smoothly over the historical pothole while reducing the impact on the vehicle; and adjusting the damping coefficient of the suspension system to 90% of the standard mode damping coefficient to maintain better driving comfort and stability while appropriately reducing the vibration caused by traversing the pothole.

When the re-determined severity level is medium, the adjustment includes: adjusting the upper speed limit of the vehicle to 60% of the current road speed limit to further reduce the impact and bump when the vehicle drives over the historical pothole; and adjusting the damping coefficient of the suspension system to 110% of the standard mode damping coefficient to enhance the damping effect, absorb more vibration energy, and protect the safety of the vehicle and passengers.

When the re-determined severity level is high, the adjustment includes: adjusting the upper speed limit of the vehicle to 50% of the current road speed limit to minimize the risk of damage when the vehicle drives over the pothole; and adjusting the damping coefficient of the suspension system to the maximum value or close to the maximum value (e.g., 150% of the standard mode damping coefficient) to maximize the absorption of vibration and impact and protect the safety of the vehicle chassis and passengers.

It is noted that the adjustment range and the specific values involved in the examples above may be set or regulated according to the vehicle model and relevant specific regulations of the driving road.

In addition, according to examples of the present disclosure, in the driver driving mode, after the decision module 28 makes a decision, the driver can be informed of the decision through the HMI 30 by means of an interface display (for example, text or graphics) or a voice broadcast. For example, the HMI 30 informs the driver that the vehicle will change lanes because there is a pothole ahead or that the vehicle will slow down and adjust the suspension because it will pass a pothole.

In addition, according to examples of the present disclosure, in the driver driving mode, when deceleration is decided, if the driver steps on the throttle softly (for example, the opening degree of the accelerator pedal is less than an opening degree threshold), the decided deceleration is still performed; if the driver steps on the throttle heavily (for example, the opening degree of the accelerator pedal is greater than or equal to the opening degree threshold), the decided deceleration is no longer performed, but acceleration is carried out in accordance with the driver's intention. In this case, the decision on suspension adjustment is still executed.

It is noted that, according to examples of the present disclosure, the execution order of the above processes 310 and 320 can be arbitrary. For example, during driving, the vehicle may first encounter a new pothole (that is, a pothole that has not been identified in the past) to complete process 310 or may first encounter a historical pothole that has been identified in the past to complete process 320.

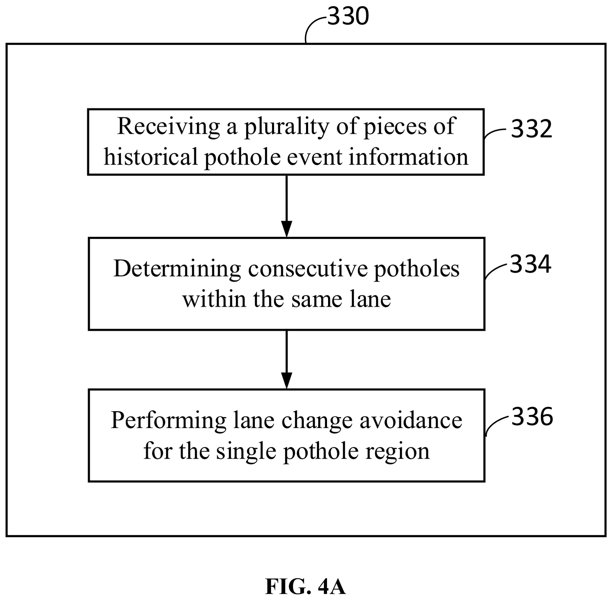

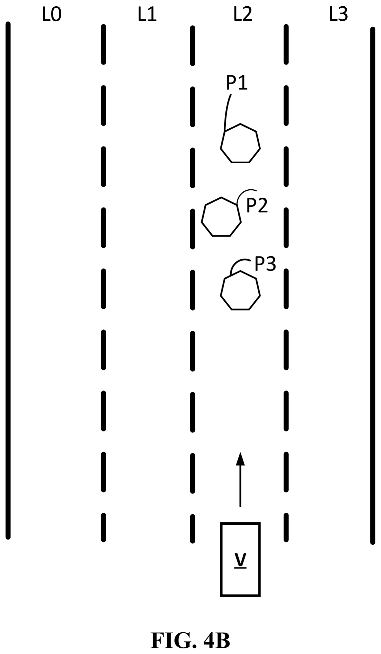

According to examples of the present disclosure, the method 300 may further include a process 330 for addressing the scenario of consecutive potholes within the same lane. Examples of the process 330 are described below with reference to FIG. 4A and FIG. 4B.

Referring to FIG. 4A, at block 332, the receiving module 25 receives a plurality of pieces of historical pothole event information. The plurality of pieces of historical pothole event information may be all from the cloud server or all from the roadside facility; alternatively, some may be from the cloud server or the roadside facility, while others may be from another vehicle. For examples of the historical pothole event information, please refer to the related descriptions above.

At block 334, the judgment module 26 judges, based on the received plurality of pieces of historical pothole event information, that a plurality of potholes indicated by the plurality of pieces of historical pothole event information are located within the same lane and that the maximum distance between them is within a predetermined distance (e.g., 50 meters). This means that these potholes can be considered consecutive potholes within the same lane.

For clarity, an example of consecutive potholes within the same lane is shown in FIG. 4B. Referring to FIG. 4B, for example, three pieces of historical pothole event information are received, and three historical potholes P1, P2, and P3 indicated by the three pieces of historical pothole event information are located within the same lane L2. Furthermore, the maximum distance between these potholes (i.e., the pothole P3 closest to the vehicle V in the direction of vehicle travel and the pothole P1 farthest from the vehicle V in the direction of vehicle travel) is less than the predetermined distance.

At block 336, the decision module 28 makes the following decision: take these historical potholes as a single pothole region (i.e., regard them as a whole) and perform lane change avoidance for the single pothole region, wherein the starting position of the single pothole region is the position of the pothole closest to the vehicle in the direction of vehicle travel, and the ending position of the single pothole region is the position of the pothole farthest from the vehicle in the direction of vehicle travel. For example, for the scenario in FIG. 4B, the decision module 28 makes a decision that vehicle V changes lanes from the current lane L2 to any one of lanes L0, L1, and L3 to avoid the single pothole region from pothole P3 to pothole P1_{∘}

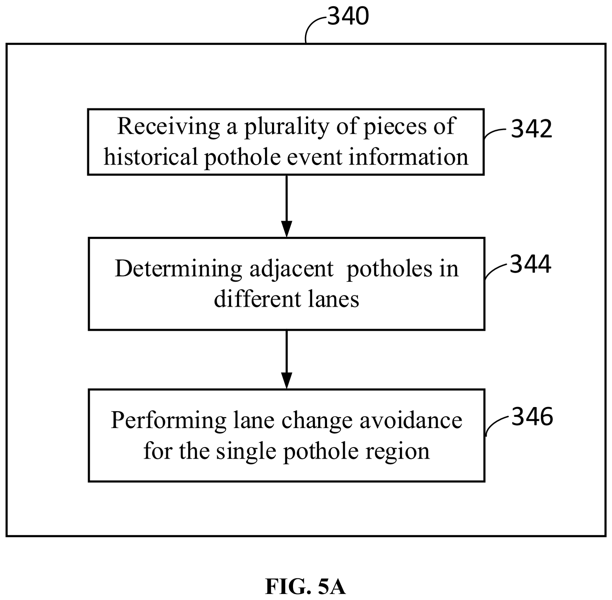

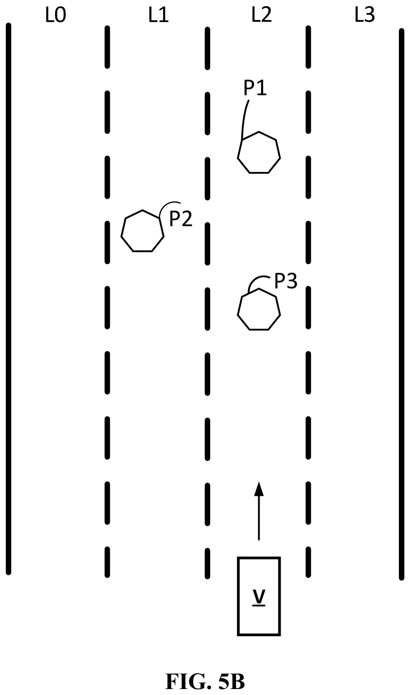

According to examples of the present disclosure, the method 300 may further include a process 340 for dealing with adjacent potholes in different lanes. Examples of the process 340 are described in the following with reference to FIG. 5A and FIG. 5B.

Referring to FIG. 5A, at block 342, the receiving module 25 receives a plurality of pieces of historical pothole event information. The plurality of pieces of historical pothole event information may be all from the cloud server or all from the roadside facility; alternatively, some may be from the cloud server or the roadside facility, while others may be from another vehicle. For examples of the historical pothole event information, please refer to the related descriptions above.

At block 344, the judgment module 26 judges, based on the received plurality of pieces of historical pothole event information, that the plurality of potholes indicated by the plurality of pieces of historical pothole event information are distributed in different lanes (e.g., two or more lanes) and within a predetermined area (e.g., 50 square meters). This means that these potholes can be considered adjacent potholes located in different lanes.

For clarity, an example of adjacent potholes in different lanes is shown in FIG. 5B. Referring to FIG. 5B, for example, three pieces of historical pothole event information are received, and three historical potholes P1, P2, and P3 indicated by the three pieces of historical pothole event information are located in different lanes; for example, the potholes P1 and P3 are located in lane L2 and the pothole P2 is located in lane L1. Also, these potholes are within the predetermined range.

At block 346, the decision module 28 makes the following decision: take these potholes as a single pothole region (i.e., regard them as a whole) and perform lane change avoidance for the single pothole region, wherein the lane change avoidance must cover all lanes in which these potholes are distributed, and the starting position of the single pothole region is the position of the pothole closest to the vehicle in the direction of vehicle travel, and the ending position is the position of the pothole farthest from the vehicle in the direction of vehicle travel. For example, for the scenario of FIG. 5B, the decision module 28 makes a decision that the vehicle changes lanes from the current lane L2 to lane L0 or L3 to avoid respective lanes L1 and L2 across which the plurality of historical potholes P1, P2, and P3 are distributed.

It is noted that, in the processes 330 and 340, for the case of multiple historical potholes, the decided strategy will be lane change avoidance, without considering the manner of adjusting the suspension and traveling over all the historical potholes, because continuously traveling over multiple potholes will cause damage to the tires, which may lead to tire burst. In the case where traffic conditions make lane change difficult, sufficient space for lane change should be created to facilitate avoidance.

It is noted that processes 330 and 340 may also be executed on a cloud server or a roadside facility. The following description uses the scenario where these processes run on a cloud server as an example.

In some examples, when the cloud server determines that a plurality of historical potholes indicated by a plurality of pieces of historical pothole event information are consecutive potholes in the same lane, the cloud server defines these historical potholes as a single pothole range and generates an instruction for the vehicle to change lanes to avoid the single pothole range, where a start position of the single pothole range is the position of the pothole closest to the vehicle in the direction of vehicle travel, and an end position of the single pothole range is the position of the pothole farthest from the vehicle in the direction of vehicle travel.

In some other examples, when the cloud server determines that a plurality of historical potholes indicated by a plurality of pieces of historical pothole event information are adjacent potholes in different lanes, the cloud server defines these historical potholes as a single pothole range and generates an instruction for the vehicle to change lanes to avoid the single pothole range, where the lane change requires avoiding all lanes in which these historical potholes are distributed, a start position of the single pothole range is the position of the pothole closest to the vehicle in the direction of vehicle travel, and an end position of the single pothole range is the position of the pothole farthest from the vehicle in the direction of vehicle travel.

According to examples of the present disclosure, a vehicle is provided, which is equipped with the above-mentioned pothole warning system 100. Therefore, the vehicle has the function of accurately identifying potholes on the traveling road and sharing the information on the identified potholes with at least one of a cloud server, another vehicle, or a roadside facility, and also has the function of planning and executing avoidance in advance when receiving historical pothole event information. Therefore, the vehicle, according to examples of the present disclosure, is both a contributor to pothole information and a beneficiary of such information.

According to examples of the present disclosure, a machine-readable storage medium is provided. The machine-readable storage medium comprises executable instructions that, when executed by a processor, cause the processor to perform the pothole warning method as described above.

According to examples of the present disclosure, a computer program product is provided. The computer program product comprises instructions which, when executed by a processor, cause the processor to perform the pothole warning method as described above.

It is noted that all the operations in the method described above are merely exemplary, and the disclosure is not limited to any operations in the method or sequence orders of these operations and should cover all other equivalents under the same or similar concepts.

It is noted that, according to the examples of the present disclosure, wheel-related parameters should be understood to include multiple or various parameters related to the wheel. These parameters can be represented either as specific numerical values or as curves or functions that vary over time. Similarly, suspension-related parameters according to the examples of the present disclosure should be understood to include multiple or various parameters related to the suspension. These parameters can be represented either as specific numerical values or as curves or functions that vary over time.

The processors can be implemented using electronic hardware, computer software, or any combination thereof. Whether these processors are implemented as hardware or software will depend on the specific application and the overall design constraints imposed on the system. By way of example, a processor, any portion of a processor, or any combination of processors presented in this disclosure may be implemented as a microprocessor, a micro-controller, a digital signal processor (DSP), a field programmable gate array (FPGA), a programmable logic device (PLD), a state machine, a gate logic, a discrete hardware circuitry, and other suitable processing components configured to perform the various functions described in this disclosure. The functions of a processor, any portion of a processor, or any combination of processors presented in this disclosure may be implemented as software executed by a microprocessor, a micro-controller, a DSP, or other suitable platforms.

Software should be interpreted broadly to represent instructions, instruction sets, code, code segments, program code, programs, subroutines, software modules, applications, software applications, software packages, routines, subroutines, objects, running threads, processes, functions, and the like. Software can reside on a non-transitory computer-readable medium. Such non-transitory computer-readable medium may include, for example, a memory, which may be, for example, a magnetic storage device (e.g., a hard disk, a floppy disk, a magnetic strip), an optical disk, a smart card, a flash memory device, a random access memory (RAM), a read only memory (ROM), a programmable ROM (PROM), an erasable PROM (EPROM), an electrically erasable PROM (EEPROM), a register, or a removable disk. Although a memory is shown as being separated from the processor in various aspects presented in this disclosure, a memory may also be internal to the processor (e.g., a cache or a register).

The previous description is provided to enable any person skilled in the art to implement the various aspects described herein. Various modifications to these aspects will be readily apparent to those skilled in the art, and the general principles defined herein may be applied to other aspects. Thus, the claims are not intended to be limited to the aspects shown herein. All structural and functional equivalent transformations to the elements of the various aspects of the disclosure, which are known or to be apparent to those skilled in the art, are intended to be covered by the claims.

## Claims

1. A pothole warning method for a vehicle, comprising:
acquiring wheel-related parameters and suspension-related parameters during driving of the vehicle;
identifying a pothole on a road on which the vehicle is traveling and a severity level of the pothole based on the wheel-related parameters and the suspension-related parameters;
generating pothole event information based on the identification result, the pothole event information comprising a location of the identified pothole, a severity level of the identified pothole, and a time at which the pothole was identified; and
transmitting the pothole event information to at least one of a cloud server, another vehicle, or a roadside facility.

2. The pothole warning method according to claim 1, wherein the wheel-related parameters comprise one or more of the following:
- vertical position of each wheel;
- tire pressure of each wheel;
- lateral acceleration of each wheel; and
- longitudinal acceleration of each wheel.

3. The pothole warning method according to claim 1 or 2, wherein the suspension-related parameters comprise one or more of the following:
- front suspension height;
- rear suspension height;
- damping force of a damper coupled to each wheel.

4. The pothole warning method of any one of the preceding claims, wherein the step of identifying the pothole and the severity level of the pothole comprises:
extracting, from the acquired wheel-related parameters and suspension-related parameters, a wheel-related parameter sequence and a suspension-related parameter sequence that correspond to a predetermined driving distance; and
inputting the wheel-related parameter sequence and the suspension-related parameter sequence into a pothole identification model and outputting the identification result from the pothole identification model, wherein the identification result includes either the detection of a pothole along with its severity level, or no pothole detected.

5. The pothole warning method according to claim 4, wherein the pothole identification model is a machine learning model trained with first training data and second training data, wherein training with the first training data enables the pothole identification model to be able to identify the severity level of the pothole, and training with the second training data enables the pothole identification model to filter out other types of uneven road surfaces besides potholes.

6. The pothole warning method according to claim 5, wherein the first training data comprise:
- pothole feature data including a pothole radius, a pothole depth, and a pothole profile of each of a plurality of potholes;
- wheel-related parameters detected as the vehicle drives over each pothole;
- suspension-related parameters detected as the vehicle drives over each pothole;
- a predetermined severity level of each pothole,
wherein the pothole feature data, the wheel-related parameters, and the suspension-related parameters are model inputs, and the predetermined severity level of each pothole is a model output.

7. The pothole warning method according to claim 5 or 6, wherein the second training data comprise:
- additional wheel-related parameters detected as the vehicle drives over said other types of uneven road surfaces;
- additional suspension-related parameters detected as the vehicle drives over said other types of uneven road surfaces;
- data representing a non-pothole event,
wherein the additional wheel-related parameters, the additional suspension-related parameters are model inputs, and the data representing the non-pothole event is a model output.

8. The pothole warning method according to any one of the preceding claims, further comprising:
receiving historical pothole event information, wherein the historical pothole event information comprises, for a historical pothole identified by the vehicle or another vehicle: a severity level and a location of the historical pothole, as well as a time at which the historical pothole was identified;
judging whether the vehicle can avoid driving over the historical pothole by changing lanes based on traffic conditions surrounding the vehicle;
determining a confidence level of the historical pothole information based on the time period elapsed since the historical pothole was identified;
re-determining a severity level of the historical pothole based on the determined confidence level; and
deciding on a strategy based on the result of the lane-change possibility determination and the re-determined severity level, wherein:
if it is determined that the vehicle can avoid driving over the historical pothole, controlling the vehicle to change lanes to avoid driving over the historical pothole; and
if it is determined that the vehicle cannot avoid driving over the historical pothole, determining an adjustment of the operating state of the vehicle according to the re-determined severity level.

9. The pothole warning method according to claim 8, wherein the step of determining the adjustment of the operating state of the vehicle according to the re-determined severity level comprises:
determining, based on the re-determined severity level:
- an upper speed limit for the vehicle when travelling over the historical pothole; and
- an adjustment amount for a damping coefficient of a suspension system damper of the vehicle.

10. The pothole warning method according to any one of the preceding claims, further comprising:
receiving a plurality of pieces of historical pothole event information corresponding to a plurality of historical potholes identified by the vehicle or another vehicle, wherein each piece of historical pothole event information comprises, for a historical pothole: a severity level and a location of the historical pothole, as well as a time at which the historical pothole was identified;
determining that the plurality of historical potholes form a sequence of consecutive potholes on the same lane or a set of adjacent potholes on adjacent lanes; and
designating the plurality of historical potholes as a single pothole region for lane change avoidance, wherein the single pothole region is defined by a starting position corresponding to the historical pothole closest to the vehicle and an ending position corresponding to the historical pothole farthest from the vehicle, and wherein the lane change avoidance comprises avoiding every lane that includes at least one historical pothole.

11. A vehicle, comprising:
a detection unit configured to detect wheel-related parameters and suspension-related parameters during driving of the vehicle; and
a pothole warning unit configured to:
acquire the wheel-related parameters and the suspension-related parameters;
identify a pothole on a road on which the vehicle is traveling and a severity level of the pothole based on the wheel-related parameters and the suspension-related parameters;
generate pothole event information based on the identification result, the pothole event information comprising a location and a severity level of the identified pothole, and a time at which the pothole was identified; and
transmit the pothole event information to one or more of a cloud server, another vehicle, and a roadside facility.

12. The vehicle according to claim 11, wherein the wheel-related parameters comprise one or more of the following:
- vertical position of each wheel;
- tire pressure of each wheel;
- lateral acceleration of each wheel; and
- longitudinal acceleration of each wheel.

13. The vehicle to claim 11 or 12, wherein the suspension-related parameters comprise one or more of the following:
- front suspension height;
- rear suspension height;
- damping force of a damper coupled to each wheel.

14. The vehicle according to any one of claims 11 to 13, wherein the pothole warning unit is configured to:
receive historical pothole event information, wherein the historical pothole event information comprises, for a historical pothole identified by the vehicle or another vehicle: a severity level and a location of the historical pothole, as well as a time at which the historical pothole was identified;
judge whether the vehicle can avoid driving over the historical pothole by changing lanes based on traffic conditions surrounding the vehicle;
determine a confidence level of the historical pothole information based on the time period elapsed since the historical pothole was identified;
re-determine a severity level of the historical pothole based on the determined confidence level; and
decide on a strategy based on the result of the lane-change possibility determination and the re-determined severity level, wherein:
if it is determined that the vehicle can avoid driving over the historical pothole, control the vehicle to change lanes to avoid driving over the historical pothole; and
if it is determined that the vehicle cannot avoid driving over the historical pothole, determine an adjustment of the operating state of the vehicle according to the re-determined severity level.

15. A non-transitory computer-readable medium with instructions stored therein which, when executed, cause one or more processors to carry out the steps comprising:
acquiring wheel-related parameters and suspension-related parameters during driving of a vehicle;
identifying a pothole on a road on which the vehicle is traveling and a severity level of the pothole based on the wheel-related parameters and the suspension-related parameters;
generating pothole event information based on the identification result, the pothole event information comprising a location of the identified pothole, a severity level of the identified pothole, and a time at which the pothole was identified; and
transmitting the pothole event information to at least one of a cloud server, another vehicle, or a roadside facility.
